# EUROPEAN PATENT SPECIFICATION

(11) **EP 2 984 310 B1**
(45) Date of publication and mention of the grant of the patent: **31.10.2018**
(21) Application number: 14782582.2
(22) Date of filing: 01.04.2014
(51) Int. Cl.: F01N 3/20, F01N 3/28, B01D 53/90

(54) **METHOD AND DEVICE FOR THE INJECTION OF A REDUCING AGENT INTO A COMBUSTION ENGINE EXHAUST PIPE**
VERFAHREN UND VORRICHTUNG ZUR EINSPRITZUNG EINES REDUKTIONSMITTELS IN EIN VERBRENNUNGSMOTOR-ABGASROHR
PROCEDE ET DISPOSITIF POUR L'INJECTION D'UN AGENT REDUCTEUR DANS UN TUYAU D'ECHAPPEMENT DE MOTEUR A COMBUSTION

(30) Priority: 12.04.2013 SE 1350467
(43) Date of publication of application: 17.02.2016
(73) Proprietor: Scania CV AB, 151 87 Södertälje (SE)
(72) Inventor: NORDIN, Niklas, S-118 56 Stockholm (SE); KONSTANZER, Dennis, S-163 54 Spånga (SE)
(74) Representative: Scania CV AB
(86) International application number: PCT/SE2014/050386
(87) International publication number: WO 2014/168554

(56) References cited:
- EP-A1- 1 748 162
- EP-A1- 1 936 137
- EP-A1- 2 565 409
- EP-A1- 2 565 409
- EP-A2- 2 423 479
- EP-A2- 2 423 479
- WO-A1-2012/172945
- FR-A1- 2 977 913
- US-A1- 2009 071 133

## Description

### FIELD OF THE INVENTION

The invention pertains to a method for the injection of a reducing agent into an exhaust pipe at a combustion engine, where the reducing agent is sprayed in the form of a spray through at least one nozzle toward several evaporator plates, arranged in a section of the exhaust pipe, and which are oriented substantially along a main flow direction for the exhaust pipe section. The invention also pertains to a device for the injection of a reducing agent into an exhaust pipe and to an exhaust system and a vehicle.

### BACKGROUND OF THE INVENTION

Prior art provides for the reduction of nitrogen oxide emissions from diesel engines with a method called SCR (Selective Catalytic Reduction). This method entails that a reducing agent in the form of a water solution of urea is added at a specified dose to the exhausts in the exhaust pipe of a diesel engine. The urea solution may be injected in the exhaust pipe in a comminuted form, in order to evaporate when it comes into contact with the hot exhausts and to form ammonia. The mixture of ammonia and exhausts is then led through the exhaust pipe to a catalyst, in which the nitrogen oxides in the exhausts are reduced, in the presence of ammonia, to nitrogen and steam.

The urea solution may be added with the help of an injection system, comprising one or several nozzles in the exhaust pipe. With the correct dosage of urea, the diesel engine's emission of nitrogen oxides may be reduced to a great extent.

During a large part of a diesel engine's operating condition, the exhausts have a sufficiently high temperature to evaporate the urea solution in order to form ammonia through contact with the exhausts. In operating conditions where the energy content of the exhausts is relatively low, this may not, however, be guaranteed. It has thus proved to be difficult during normal and varied operation to avoid, at least under certain conditions, a part of the urea solution added coming into contact with and getting stuck to the internal wall surface of the exhaust pipe in a non-evaporated state. The exhaust pipe is cooled by the surrounding air and therefore usually has a lower temperature than the exhausts inside the exhaust pipe.

The injection of the urea solution also contributes to the cooling of the exhaust pipe wall locally, to the extent that the urea solution reaches this wall. This is another aggravating circumstance which may contribute to the build-up of unwanted deposits. When the temperature is reduced in an area which receives injected urea solution below the evaporation temperature for urea, a deposit of urea and impurities consisting of urea compounds will accumulate and build up in these areas, where the water in the urea solution has typically not boiled off.

If the formation of solid urea is greater than the evaporation, an additional accumulation of urea occurs in the exhaust pipe, where urea may decompose into a range of different compounds, which may react with each other and with newly added urea from the exhausts. The result is a significant build-up of solid material consisting of primitive polymers on a urea basis, forming deposits on the inside of the exhaust pipe. Such deposits may even, over time, more or less block an exhaust pipe with all this implies for the operation. In addition, poor evaporation of added urea entails a reduction of the exhaust purification function for the combustion engine.

Many factors impact on the formation of solid urea deposits, of which exhaust, wall and spray characteristics may be mentioned. The exhaust characteristics are e.g. temperature, composition, flow and flow rate. The wall characteristics are e.g. the thermal conductivity, outer temperature and surface structure of the wall materials. The spray characteristics are, among others, the droplet size distribution, spray angle, spray rate, spray temperature, dosage frequency and density of the spray liquid. Furthermore, design and construction factors, such as injection position and injection angle have a relative impact on the exhausts, which also goes for the design of the nozzle.

US 2008/0193353 A1 and US 2008/0134671 A1 may be mentioned as examples of the background of the technology. Both these documents describe injection of urea in an exhaust pipe upstream of a system with evaporation plates. Another document showing the background is EP 2 565 409 A1 which discloses a method for injection of a reducing agent into an exhaust pipe at a combustion engine. The reducing agent is sprayed in the form of a spray through at least one nozzle toward several evaporation plates arranged inside an exhaust pipe section. Still another document showing the background is EP 2 423 479 A2 which discloses an arrangement with evaporation plates having a plurality of through-holes. The reducing agent is sprayed towards an evaporation plate and a fraction of the reducing agent then passes through the holes in the evaporation plate towards an evaporation plate behind.

### OBJECTIVE AND MAIN FEATURES OF THE INVENTION

One objective of the present invention is to provide a method and a device entailing further development of the prior art solutions, in order to, in an economical and reliable manner, at least reduce the problems with poor evaporation of injected urea in an exhaust pipe during different operating conditions for a combustion engine.

This objective is achieved with a method of the type mentioned above by injecting the reducing agent toward the evaporation plates' respective first side, which constitutes the evaporation side, between an upstream end section and a downstream end section which are kept free of spraying. The reducing agent is injected toward the evaporation sides while acute angles are formed between spray directions for the reducing agent and the evaporation sides, seen transversely toward the main flow direction, at least in surface sections connected to the respective edges running between said upstream and downstream end sections, which edges are near said nozzle.

Thus a number of advantages are achieved. Since the reducing agent is injected toward a first side which constitutes the evaporation side of the respective evaporation plate, the opposite side of the respective evaporation plate is kept free of the water-borne reducing agent, and thus coming substantially exclusively into contact with and is permitted to be heated by the hot exhausts, so that the evaporation characteristics of the evaporation plates are improved.

The reason for this is that the heat conduction from the hot (the second side) to the first side takes place only through the thickness dimension of the plates, from one side to the other side, which is a great advantage since a more direct heat transfer is permitted. Thus an effective evaporation may be achieved with evaporation plates made of stainless steel, which may resist the very aggressive environment prevailing in this section of an exhaust pipe, despite the poor thermal conductivity of this material. Because of the poor thermal conductivity of stainless steel it therefore is an advantage that the invention avoids dependency on heat conductivity occurring laterally across the width and length of the evaporation plates of the relevant type, in order for the required evaporation temperature to be reached on the evaporation sides of the plates.

By keeping the upstream and downstream sections of the evaporation plates free, urea spray ending up on said other side, opposite to the evaporation side is, for one, avoided, as is urea spray being permitted to leave the evaporation plate arrangement without even having hit an evaporation plate, which could entail build-up of unwanted deposits downstream of the evaporation plates in accordance with the description above.

Thanks to the invention, the reducing agent (urea) is in practice basically injected from the side of the aggregate with evaporation plates, so that for each evaporation plate which has an evaporation plate placed behind itself, seen in the direction of the spray, an area of an edge, which runs between the upstream and downstream end sections is located within the range of the spray.

This means that spray which ends up outside said edge and does not hit the evaporation surface of a first evaporation plate instead hits the evaporation surface of a second evaporation plate located behind it, and so on. Thanks to the invention, a protecting effect of the plates is also achieved, avoiding to a large extent that the reducing agent ends up in an unwanted location with the consequences this would otherwise entail.

This means that a larger evaporation surface per plate becomes accessible, so that a smaller amount of urea per surface unit needs to be evaporated by the evaporation plates, which leads to more efficient evaporation, in particular in otherwise problematic operating conditions. By spraying from the side, the spray angle may, through adjustment of different mutual angles, be increased in an advantageous manner, which allows for an advantageous increase of sprayed surface area of the evaporation plates.

In addition, the invention allows for lower precision requirements on the injection system itself, since the invention means that a spray containing comparably larger drops is acceptable, so that more uncomplicated injection pumps and injection nozzles may be used, entailing a more economical preparation and additionally lower operating costs for the injection system.

In addition, a spray containing larger drops has proved to be an advantage, since such a spray is easier to control with respect to where the spray hits the evaporation plates, compared to a spray with very small drops, aerosols, which are much more easily transported further by the exhaust stream and risk ending up in unwanted places. Overall, this means a large evaporation surface may be used, which thus does not lead to any remaining liquid film, since this provides for a greater evaporation potential.

Since the reducing agent is injected toward the evaporation sides while acute angles are formed between spray directions for the reducing agent and the evaporation sides, seen transversely toward the main flow direction, at least in surface sections connected to the respective edges running between said upstream and downstream end sections, which edges are near said nozzle the flow of the reducing agent along the surface sections occurs in the wanted directions and avoids the reducing agent passing an adjacent edge in such a manner that spray drops risk hitting cold surface sections of the exhaust pipe.

It is preferred that the reducing agent be sprayed in the direction of the evaporation plates which partly overlap each other, since this entails that spreading may occur to larger areas, entailing better conditions for evaporation.

Suitably, the reducing agent is injected in the exhaust pipe in a main spray direction, which forms an angle between 70°-90° with the main flow direction. It is also suitable for the reducing agent to be injected at a scattering angle of 20°-120°, so that the scattering angle in the exhaust pipe's transverse direction may be different than in the exhaust pipe's lengthwise direction.

Typically, the scattering angle in the transverse direction of the exhaust pipe is selected so that the reducing agent is sprayed both on a section of an evaporation plate, and past an edge of this evaporation plate in order to hit an evaporation plate which is located behind it in the spraying direction, past an edge of this, etc.

The invention also pertains to a device for injection of a reducing agent into an exhaust pipe at a combustion engine, comprising at least one nozzle for injection of the reducing agent in the form of a spray toward a number of evaporation plates, arranged inside an exhaust pipe section, and which are oriented substantially along one main flow direction for the exhaust pipe section, and each of which has one upstream end section, one downstream end section, one first side and one second side, where said at least one nozzle is placed and directed to spray the reducing agent toward the evaporation plates' respective first sides, constituting the evaporation side between said upstream end section and said downstream end section, so that these sections are not sprayed.

Features similar to the method features entail similar advantages.

Said at least one nozzle is suitably arranged in the exhaust pipe, between said upstream and downstream end sections, seen in said main flow direction.

The evaporation plates preferably partly overlap each other, seen from said at least one nozzle.

Seen across said main flow direction, the evaporation plates advantageously have one of the following cross-sectional shapes: wholly or partly rectilinear, simple curved, multi-curved and partially curved.

Said at least one nozzle is preferably arranged to inject the reducing agent in the exhaust pipe in a main spray direction, which forms an angle of between 70°-90° with the main flow direction.

It is preferred for the number of evaporation plates to be 2-8. It is more preferred for the number of evaporation plates to be 4-6.

It is also preferred that the evaporation plates have a length in the main flow direction which is 2-5 times their width across the flow direction, for the achievement of secure evaporation also of larger sprayed drops of the reducing agent.

The invention also pertains to an exhaust system for a combustion engine, comprising a device according to the above, and a vehicle, where similar advantages are achieved.

### BRIEF DESCRIPTION OF DRAWINGS

The invention will now be described in further detail based on the example embodiments and with reference to the enclosed drawings, in which:
Fig. 1 shows an axial section through an exhaust pipe equipped with a device according to the invention,
Fig. 2 shows a cross section of an exhaust pipe in the area of a device according to a second embodiment of the invention,
Fig. 3 shows schematically a cross section of an exhaust pipe at a third embodiment of the invention,
Fig. 4 shows schematically an exhaust system equipped with a device according to the invention, and
Fig. 5 shows schematically a vehicle according to the invention.

### DESCRIPTION OF EXAMPLE EMBODIMENTS

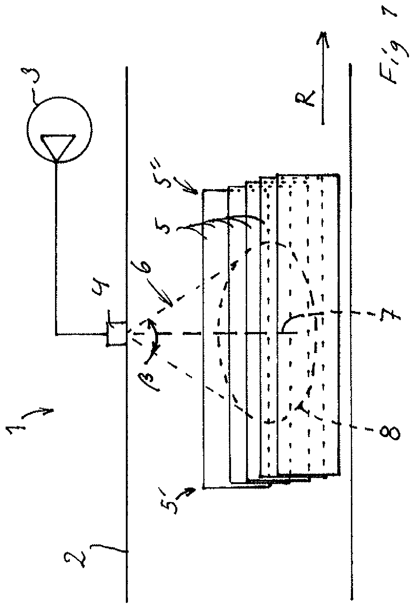

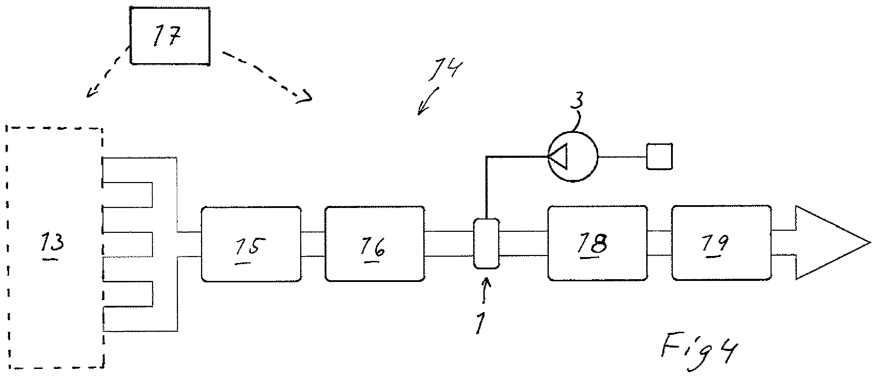

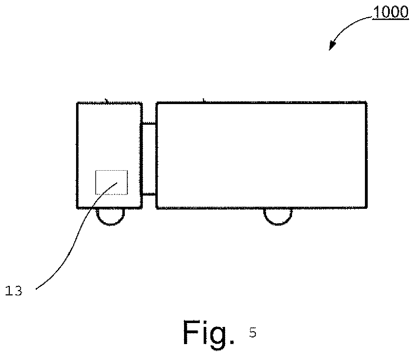

Fig. 1 shows a device 1 for injection of a reducing agent in an exhaust pipe for a combustion engine 13 (see Fig. 4, 4) in a vehicle 1000 (see Fig. 5). In the displayed section of an exhaust pipe 2, a nozzle 4 is arranged in the area of the exhaust pipe wall. The nozzle 4 is fed with reducing agent by a pump 3. Additional elements such as dosage equipment, control circuits, which are required for the operation of the device 1 are not shown in Fig. 1.

The nozzle 4 is set to spray a spray of the reducing agent onto a number of evaporation plates 5, where the spray consists of a spray mist 6 with a scattering angle β viewed in a plane parallel with the main flow direction R of exhausts flowing through the exhaust pipe 2.

The spray mist is sprayed in a main spray direction 7, which in the example shown forms a right angle with said main flow direction R.

A sprayed area on aggregates of evaporation plates 5 is indicated schematically with 8. Each one of the evaporation plates 5 also has an upstream end section 5' and a downstream end section 5", which are kept free from direct spraying by the nozzle 4.

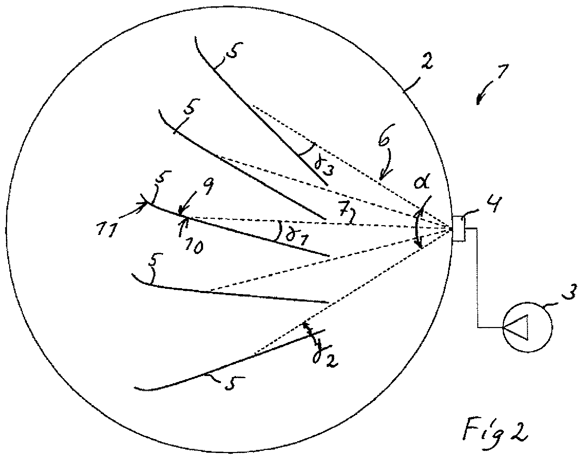

Fig. 2 shows an arrangement with a nozzle 4 in connection with an exhaust pipe 2, which is shown in a cross section. The nozzle 4 sprays with a scattering angle α viewed in a transverse direction toward, in this case, five evaporation plates 5, which are plane along the part of their extension which is closest to the nozzle, so that the plane sections form mutual angles with each other in a fan-like manner. Each evaporation plate 5 has a first side 9, having a plane forming an angle in relation to the main spraying direction 7, and being obliquely oriented toward the nozzle 4, so that on the evaporation plate 5 only this first side 9 is sprayed directly with reducing agent from the nozzle 4. On the opposite side of each evaporation plate 5, which is a second side 10, the exhaust stream flows, according to the invention, along the surface without having to evaporate the present liquid reducing agent on this side. In this manner, this second side 10 is permitted to be heated strongly, so that the heat transfer from this second side, the heating side, to the evaporation side 9 occurs through the thickness dimension of the evaporation plate 5.

Each one of the five evaporation plates in the embodiment in Fig. 2 has an evaporation side and a heating side in this manner. Seen transversely to the main flow direction R (see Fig. 1), the reducing agent is sprayed toward the evaporation sides of the respective evaporation plates, while acute angles γ₁, γ₂, γ₃ are formed between the spray directions for the reducing agent and the evaporation sides, at least in surface sections connected to the respective edges running between said upstream end sections 5' and said downstream end sections 5'', the edges of which are near said nozzle or nozzles 4. Thus the reducing agent is made to flow in the wanted directions and there is no risk that it may hit cold surface sections of the exhaust pipe.

11 indicates a longitudinal, substantially parallel to the flow of direction R (see Fig. 1), continuous longitudinal hemming of a side edge of each evaporation plate which is opposite to the edge facing the area of the nozzle 4. The objective of this longitudinal hemming is to catch potentially remaining drops of the evaporation agent and to brake any potential remaining wall film, which may move in a transverse direction on the evaporation side of each evaporation plate as a result of the spraying action.

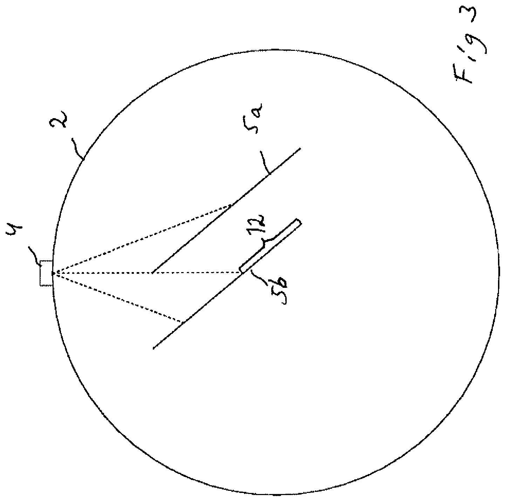

Fig. 3 shows schematically, for purposes of clarification, in an exhaust pipe 2, two entirely plane evaporation plates 5a and 5b which are shown as clearly overlapping each other, so that an area 12 of the evaporation plate 5b behind is protected from direct spraying of the reducing agent from the nozzle 4 through the evaporation plate 5a in front. This area 12 is used according to the invention to provide an additional heating surface, and liquid drops and wall film are permitted, in different operating conditions, to glide or otherwise be moved to this area from the directly sprayed area, which thus allows an increase of the size of the area on which evaporation of the reducing agent may occur.

In Fig. 4, 14 schematically indicates (a part of) an exhaust system for a combustion engine 13 equipped with a device 1 fed by a pump 3 according to the invention. 15 indicates a diesel oxidation catalyst (DOC), 16 a filter for removal of soot particles (DPF: Diesel particulate filter), 18 a catalyst in which nitrogen oxides in the exhausts are reduced in the presence of ammonia (SCR: Selective catalytic reduction unit), and 19 indicates a device for the removal of potentially remaining ammonia (ASC: Ammonia slip catalyst). 17 indicates a control circuit for the control of the device 1 for injection of reducing agent. This control circuit 17 may be comprised in an integrated control system for the combustion engine 13 and/or for a vehicle comprising an exhaust system 14.

The invention may be modified within the framework of the following claims. Thus the evaporation plates may be designed with different shapes, e.g. may be continuously curved or wavy. In the event of a curved exhaust pipe section for insertion of the device according to the invention, the plates typically follow a curved main flow direction in order to avoid causing flow losses. In this case, it is thus a question of providing plates that are curved in a longitudinal direction.

Flanges or different surface enlargements, which suitably extend along the main flow direction in order to avoid excessive flow resistance, may be provided on the heating side to achieve increased heat transfer from the exhausts.

The surface on the evaporation side may be made with different surface structures, e.g. with a matt structure or velvet structure, which provides a better adhesion of a sprayed spray compared to if the surface were completely smooth.

The orientation of the plates so that the force of gravity is permitted to act on the spray, as well as on the sprayed reducing agent, in order to expand plate areas hit by the spray, is a positive factor regarding the effect of the invention, due to the increased scattering effect on the plates and thus the use of larger plate surfaces. Such an effect may be expected for a device oriented as shown in Fig. 3.

In order to fix the evaporation plates, e.g. ledge-shaped braces may be used, which run through holes in the plates, and which braces are suitably set with narrow ends, tapering in the flow direction in both the upstream and the downstream directions. The braces may, in turn, be fixed through screwing or welding in a section of the exhaust pipe.

If more than one nozzle is used to inject the reducing agent, these may be set to spray after each other, seen in the main flow direction on extended evaporation plates, or so that e.g. a first nozzle sprays on a first number of evaporation plates and a second nozzle sprays on a second number of evaporation plates.

## Claims

1. Method for injection of a reducing agent into an exhaust pipe (2) at a combustion engine, wherein the reducing agent is sprayed in the form of a spray through at least one nozzle (4) toward several evaporation plates (5) arranged inside an exhaust pipe section, and which are oriented substantially along a main flow direction (R) for the exhaust pipe section, and each of which has an upstream end section (5'), a downstream end section (5''), a first side (9) and a second side (10),wherein the reducing agent is sprayed directly toward the evaporation plates' (5) respective first sides (9), constituting the evaporation side between said upstream end section (5') and said downstream end section (5''), which end sections are kept free of spraying, **characterised in that** seen transversely to the main flow direction (R), the reducing agent is sprayed toward the evaporation sides, while acute angles (γ₁,γ₂,γ₃) are formed between the spraying directions of the reducing agent and the evaporation sides, at least in surface sections connected to the respective edges running between said upstream end sections (5') and said downstream end sections (5"), which edges are near said nozzle or nozzles (4).

2. Method according to claim 1, **characterised in that** the reducing agent is sprayed toward the evaporation plates (5) which partly overlap each other.

3. Method according to any of claims 1-2, **characterised in that** the reducing agent is injected into the exhaust pipe (2) in a main spray direction (7), which forms an angle of between 70°-90° with the main flow direction (R).

4. Method according to any of claims 1-3, **characterised in that** the reducing agent is sprayed with a scattering angle (α; β) of 20°-120°.

5. Device (1) for injection of a reducing agent into an exhaust pipe (2) at a combustion engine, comprising at least one nozzle (4) for spraying reducing agent in the form of a spray toward several evaporation plates (5), arranged inside an exhaust pipe section, and which are oriented substantially along a main flow direction (R) for the exhaust pipe section, and each of which has an upstream end section (5'), a downstream end section (5''), a first side (9) and a second side (10), wherein said at least one nozzle (4) is placed and directed to spray the reducing agent directly toward the evaporation plates' (5) respective first sides (9), constituting the evaporation side between said upstream end section (5') and said downstream end section (5''), so that these end sections are kept free of spraying, **characterised in that** the evaporation plates (5) and said at least one nozzle (4) are arranged, seen transversely to the main flow direction (R), so that the reducing agent is sprayed toward the evaporation sides, while acute angles are formed between the spraying directions of the reducing agent and the evaporation sides, at least in surface sections connected to the respective edges running between said upstream end sections and the downstream end sections, which edges are near said nozzle (4).

6. Device according to claim 5, **characterised in that** said at least one nozzle (5) is arranged in the exhaust pipe (2) between said upstream end sections (5') and said downstream end sections (5''), seen in said main flow direction (R).

7. Device according to any of claims 5-6, **characterised in that** the evaporation plates (5) partly overlap each other, seen from said at least one nozzle (4).

8. Device according to any of claims 5-7, **characterised in that** said at least one nozzle (4) is arranged to inject the reducing agent into the exhaust pipe (2) in a main spray direction (7), which forms an angle of between 70°-90° with the main flow direction (R).

9. Device according to any of claims 5-8, **characterised in that** said at least one nozzle (4) is arranged to spray the reducing agent with a scattering angle (α; β) of 20°- 120°.

10. Device according to any of claims 5-9, **characterised in that** the number of evaporation plates (5) is 2-8, preferably 4-6.

11. Device according to any of claims 5-10, **characterised in that** the evaporation plates (5) have a length in the main flow direction which is 2-5 times their width across the flow direction.

12. Exhaust system for a combustion engine, comprising a device according to any of claims 5-11.

13. Vehicle comprising an exhaust system according to claim 12.

## Patentansprüche

1. Verfahren zum Einspritzen eines Reduktionsmittels in ein Abgasrohr (2) bei einem Verbrennungsmotor, wobei das Reduktionsmittel in der Form eines Sprühnebels durch zumindest eine Düse (4) zu mehreren Verdampferplatten (5) gesprüht wird, die innerhalb eines Abgasrohrabschnitts angeordnet und im Wesentlichen entlang einer Hauptflussrichtung (R) für den Abgasrohrabschnitt ausgerichtet sind, wobei jede der Verdampferplatten (5) einen zuströmseitigen Endabschnitt (5'), einen abströmseitigen Endabschnitt (5"), eine erste Seite (9) und eine zweite Seite (10) aufweist, wobei das Reduktionsmittel unmittelbar zu den entsprechenden ersten Seiten (9) der Verdampferplatten (5) gesprüht wird, welche die Verdampferseite zwischen dem zuströmseitigen Endabschnitt (5') und dem abströmseitigen Endabschnitt (5") darstellen, wobei die Endabschnitte von einem Besprühen freigehalten werden, **dadurch gekennzeichnet, dass** in einer Betrachtung quer zu der Hauptflussrichtung (R) das Reduktionsmittel zu den Verdampferseiten gesprüht wird, während spitze Winkel (γ1, γ2, γ3) zwischen den Sprührichtungen des Reduktionsmittels und den Verdampferseiten gebildet sind, zumindest in Oberflächenabschnitten, die mit den entsprechenden Kanten verbunden sind, die sich zwischen den zuströmseitigen Endabschnitten (5') und den abströmseitigen Endabschnitten (5") erstrecken, wobei die Kanten sich in der Nähe der Düse oder der Düsen (4) befinden.

2. Verfahren gemäß Anspruch 1, **dadurch gekennzeichnet, dass** das Reduktionsmittel zu den Verdampferplatten (5) gesprüht wird, die einander teilweise überlappen.

3. Verfahren gemäß einem der Ansprüche 1 bis 2, **dadurch gekennzeichnet, dass** das Reduktionsmittel in das Abgasrohr (2) hinein in eine Hauptsprührichtung (7) eingespritzt wird, die mit der Hauptflussrichtung (R) einen Winkel zwischen 70° und 90° bildet.

4. Verfahren gemäß einem der Ansprüche 1 bis 3, **dadurch gekennzeichnet, dass** das Reduktionsmittel mit einem Streuwinkel (α; β) von 20° bis 120° gesprüht wird.

5. Vorrichtung (1) zum Einspritzen eines Reduktionsmittels in ein Abgasrohr (2) bei einem Verbrennungsmotor, umfassend zumindest eine Düse (4) zum Sprühen von Reduktionsmittel in der Form eines Sprühnebels zu mehreren Verdampferplatten (5), die innerhalb eines Abgasrohrabschnitts angeordnet und im Wesentlichen entlang einer Hauptflussrichtung (R) für den Abgasrohrabschnitt ausgerichtet sind, wobei jede der Verdampferplatten (5) einen zuströmseitigen Endabschnitt (5'), einen abströmseitigen Endabschnitt (5"), eine erste Seite (9) und eine zweite Seite (10) aufweist, wobei die zumindest eine Düse (4) dazu angeordnet und ausgerichtet ist, das Reduktionsmittel unmittelbar zu den entsprechenden ersten Seiten (9) der Verdampferplatten (5) zu sprühen, welche die Verdampferseite zwischen dem zuströmseitigen Endabschnitt (5') und dem abströmseitigen Endabschnitt (5") darstellen, sodass diese Endabschnitte von einem Besprühen freigehalten werden, **dadurch gekennzeichnet, dass** in einer Betrachtung quer zu der Hauptflussrichtung (R) die Verdampferplatten (5) und die zumindest eine Düse (4) derart angeordnet sind, dass das Reduktionsmittel zu den Verdampferseiten gesprüht wird, während spitze Winkel zwischen den Sprührichtungen des Reduktionsmittels und den Verdampferseiten gebildet sind, zumindest in Oberflächenabschnitten, die mit den entsprechenden Kanten verbunden sind, die sich zwischen den zuströmseitigen Endabschnitten und den abströmseitigen Endabschnitten erstrecken, wobei die Kanten sich in der Nähe der Düse oder der Düsen (4) befinden.

6. Vorrichtung gemäß Anspruch 5, **dadurch gekennzeichnet, dass** in einer Betrachtung in die Hauptflussrichtung (R) die zumindest eine Düse (5) in dem Abgasrohr (2) zwischen dem zuströmseitigen Endabschnitt (5') und dem abströmseitigen Endabschnitt (5") angeordnet ist.

7. Vorrichtung gemäß einem der Ansprüche 5 bis 6, **dadurch gekennzeichnet, dass** von der zumindest einen Düse (4) aus betrachtet die Verdampferplatten (5) einander teilweise überlappen.

8. Vorrichtung gemäß einem der Ansprüche 5 bis 7, **dadurch gekennzeichnet, dass** die zumindest eine Düse (4) dazu eingerichtet ist, das Reduktionsmittel in das Abgasrohr (2) hinein in eine Hauptsprührichtung (7) einzuspritzen, die einen Winkel zwischen 70° und 90° mit der Hauptflussrichtung (R) bildet.

9. Vorrichtung gemäß einem der Ansprüche 5 bis 8, **dadurch gekennzeichnet, dass** die zumindest eine Düse (4) dazu eingerichtet ist, das Reduktionsmittel mit einem Streuwinkel (α; β) von 20° bis 120° zu sprühen.

10. Vorrichtung gemäß einem der Ansprüche 5 bis 9, **dadurch gekennzeichnet, dass** die Anzahl von Verdampferplatten (5) 2 bis 8 ist, vorzugsweise 4 bis 6.

11. Vorrichtung gemäß einem der Ansprüche 5 bis 10, **dadurch gekennzeichnet, dass** die Verdampferplatten (5) in die Hauptflussrichtung eine Länge aufweisen, die dem 2-Fachen bis 5-Fachen ihrer Breite quer zur Flussrichtung entspricht.

12. Abgassystem für einen Verbrennungsmotor, umfassend eine Vorrichtung gemäß einem der Ansprüche 5 bis 11.

13. Fahrzeug, umfassend ein Abgassystem gemäß Anspruch 12.

## Revendications

1. Procédé d'injection d'un agent réducteur dans un tuyau d'échappement (2) au niveau d'un moteur à combustion, dans lequel l'agent réducteur est pulvérisé sous la forme d'un spray à travers au moins une buse (4) en direction de plusieurs plaques d'évaporation (5) disposées à l'intérieur d'une section de tuyau d'échappement, et qui sont orientées essentiellement le long d'un sens d'écoulement principal (R) de la section de tuyau d'échappement, chacune présentant une section d'extrémité amont (5'), une section d'extrémité aval (5"), un premier côté (9) et un second côté (10), l'agent réducteur étant pulvérisé directement en direction des premiers côtés (9) respectifs des plaques d'évaporation (5), constituant le côté évaporation entre ladite section d'extrémité amont (5') et ladite section d'extrémité aval (5"), lesdites sections d'extrémité étant maintenues sans pulvérisation, **caractérisé en ce que**, selon une vue transversale par rapport au sens d'écoulement principal (R), l'agent réducteur est pulvérisé en direction des côtés évaporation, tandis que des angles aigus (y₁, y₂, y₃) sont formés entre les directions de pulvérisation de l'agent réducteur et les côtés évaporation, au moins dans des sections de surface connectées aux bords respectifs s'étendant entre lesdites sections d'extrémité amont (5') et lesdites sections d'extrémité aval (5"), lesdits bords étant près de ladite buse ou desdites buses (4).

2. Procédé selon la revendication 1, **caractérisé en ce que** l'agent réducteur est pulvérisé en direction des plaques d'évaporation (5) qui se chevauchent partiellement les unes et les autres.

3. Procédé selon l'une des revendications 1 ou 2, **caractérisé en ce que** l'agent réducteur est injecté dans le tuyau d'échappement (2) dans une direction principale de pulvérisation (7) qui forme un angle entre 70 et 90° avec le sens d'écoulement principal (R).

4. Procédé selon l'une des revendications 1 à 3, **caractérisé en ce que** l'agent réducteur est pulvérisé selon un angle de diffusion (α ; β) compris entre 20° et 120°.

5. Dispositif (1) d'injection d'un agent réducteur dans un tuyau d'échappement (2) au niveau d'un moteur à combustion, comprenant au moins une buse (4) de pulvérisation de l'agent réducteur sous la forme d'un spray en direction de plusieurs plaques d'évaporation (5), disposées à l'intérieur d'une section de tuyau d'échappement et qui sont orientées essentiellement le long d'un sens d'écoulement principal (R) de la section de tuyau d'échappement, et chacune présentant une section d'extrémité amont (5'), une section d'extrémité aval (5"), un premier côté (9) et un second côté (10), où ladite buse (4), au moins au nombre de une, est placée et orientée pour pulvériser l'agent réducteur directement en direction des premiers côtés (9) respectifs des plaques d'évaporation (5), constituant le côté évaporation entre ladite section d'extrémité amont (5') et ladite section d'extrémité aval (5"), si bien que ces sections d'extrémité sont maintenues sans pulvérisation, **caractérisé en ce que** les plaques d'évaporation (5) et lesdites buses (4), au moins au nombre de une, sont disposées, en vue transversale par rapport au sens d'écoulement principal (R), de façon à ce que l'agent réducteur soit pulvérisé en direction des côtés évaporation, tandis que des angles aigus sont formés entre les directions de pulvérisation de l'agent réducteur et les côtés évaporation, au moins dans des sections de surface connectées aux bords respectifs s'étendant entre lesdites sections d'extrémité amont et les sections d'extrémité aval, les bords se trouvant près de ladite buse (4).

6. Dispositif selon la revendication 5, **caractérisé en ce que** lesdites buses (5), au moins au nombre de une, sont disposées dans le tuyau d'échappement (2) entre lesdites sections d'extrémité amont (5') et lesdites sections d'extrémité aval (5"), tel que vu dans le sens d'écoulement principal (R).

7. Dispositif selon l'une des revendications 5 ou 6, **caractérisé en ce que** les plaques d'évaporation (5) se chevauchent partiellement les unes les autres, tel que vu depuis lesdites buses (4), au moins au nombre de une.

8. Dispositif selon l'une des revendications 5 à 7, **caractérisé en ce que** lesdites buses (4), au moins au nombre de une, sont disposées pour injecter l'agent réducteur dans le tuyau d'échappement (2) dans une direction principale de pulvérisation (7) qui forme un angle entre 70° et 90° avec le sens d'écoulement principal (R).

9. Dispositif selon l'une des revendications 5 à 8, **caractérisé en ce que** lesdites buses (4), au moins au nombre de une, sont disposées pour pulvériser l'agent réducteur selon un angle de diffusion (α ; β) de 20° à 120°.

10. Dispositif selon l'une des revendications 5 à 9, **caractérisé en ce que** le nombre de plaques d'évaporation (5) est compris entre 2 et 8, de préférence entre 4 et 6.

11. Dispositif selon l'une des revendications 5 à 10, **caractérisé en ce que** les plaques d'évaporation (5) ont une longueur dans le sens d'écoulement principal qui est 2 à 5 fois leur largeur dans le sens transversal au sens d'écoulement.

12. Système d'échappement pour moteur à combustion, comprenant un dispositif selon l'une des revendications 5 à 11.

13. Véhicule comprenant un système d'échappement selon la revendication 12.
